# EUROPEAN PATENT SPECIFICATION

(11) **EP 1 739 108 B1**
(45) Date of publication and mention of the grant of the patent: **23.04.2008**
(21) Application number: 06252918.5
(22) Date of filing: 06.06.2006
(51) Int. Cl.: C08F 220/56, C08F 228/02

(54) **Thickener for aqueous systems**
Verdickungsmittel für wässrige Systeme
Epaississant pour systèmes aqueux

(30) Priority: 29.06.2005 US 695198 P
(43) Date of publication of application: 03.01.2007
(73) Proprietor: Rohm and Haas Company, Philadelphia, PA 19106-2399 (US)
(72) Inventor: Zeng, Fanwen, Belle Mead, New Jersey 07502 (US)
(74) Representative: Kent, Venetia Katherine

(56) References cited:
- US-A- 5 721 313
- US-A1- 2001 029 287

## Description

This invention relates to a polymeric thickener suitable for use in aqueous systems.

Rheology modifiers are used in aqueous cleaning products, including for example, shampoo, to increase viscosity at low shear rates while maintaining flow properties of the product at higher shear rates. A variety of copolymer thickeners made from vinyl monomers have been used for this purpose. For example, U.S. Pat. No. 6,645,476 discloses a water-soluble vinyl copolymer containing sulfonic acid groups. This polymer is used as a thickener in aqueous systems and functions at low pH. However, thickeners providing an optimum viscosity profile at lower pH are greatly needed to provide thickening and suspending, as well as emulsifying efficiency.

The problem addressed by the present invention is the need for rheology-modifying polymers providing optimum viscosity profiles in aqueous compositions, especially at lower pH.

### STATEMENT OF INVENTION

The present invention provides a polymer comprising: (a) from 15% to 65% sulfonic acid monomer residues; (b) from 15% to 70% acrylamide residues;
(c) from 2% to 20% of residues of at least one of: (i) an alkyl (meth)acrylate, (ii) a vinyl alkanoate, (iii) an N-vinyl alkylamide, and (iv) an N-alkyl (meth)acrylamide; wherein an alkyl group having from 6-25 carbon atoms is present; and (d) from 0.25% to 1.5% of residues of at least one crosslinker.

The present invention further provides an aqueous composition comprising from 0.05% to 5% of the aforementioned polymer, and having a pH from 2 to 10.

### DETAILED DESCRIPTION

Percentages are weight percentages based on the entire composition, unless specified otherwise.

As used herein the term "(meth)acrylic" refers to acrylic or methacrylic, and "(meth)acrylate" refers to acrylate or methacrylate. "Acrylic monomers" include acrylic acid (AA), methacrylic acid (MAA), esters of AA and MAA, acrylamide (AM), methacrylamide (MAM), and derivatives of AM and MAM. Esters of AA and MAA include, but are not limited to, alkyl, hydroxyalkyl and sulfoalkyl esters, e.g., methyl methacrylate (MMA), ethyl methacrylate (EMA), butyl methacrylate (BMA), hydroxyethyl methacrylate (HEMA), hydroxyethyl acrylate (HEA), isobornyl methacrylate (IBOMA), methyl acrylate (MA), ethyl acrylate (EA), butyl acrylate (BA), and longer chain alkyl (meth)acrylates such as ethylhexyl acrylate (ERA), lauryl methacrylate (LMA), cetyl methacrylate (CEMA), and stearyl methacrylate (SMA). The term "(meth)acrylamide" refers to acrylamide (AM) or methacrylamide (MAM). Derivatives of (meth)acrylamide include, but are not limited to, alkyl- and sulfoalkyl-substituted (meth)acrylamides, e.g., N,N-dimethyl acrylamide, N,N-dipropyl acrylamide, t-butyl acrylamide, N-octyl acrylamide, 2-acrylamido-2-methylpropanesulfonic acid (AMPS), and longer chain alkyl (meth)acrylamides such as N-lauryl methacrylamide, N-stearyl methacrylamide.

The term "vinyl monomers" refers to monomers that contain a carbon-carbon double bond that is connected to a heteroatom such as nitrogen or oxygen. Examples of vinyl monomers include, but are not limited to, vinyl acetate, vinyl formamide, vinyl acetamide, vinyl pyrrolidone, vinyl caprolactam, and long chain vinyl alkanoates such as vinyl neodecanoate, and vinyl stearate.

The term "acrylic polymers" refers to polymers of acrylic monomers, and copolymers comprising at least 50% of acrylic monomers and (meth)acrylamide monomers. Preferably, acrylic polymers have at least 75% of monomer residues derived from (meth)acrylic acid or (meth)acrylate or (meth)acrylamide monomers, more preferably at least 85%, and most preferably at least 95%. Preferably, the remaining monomer units are derived from vinyl monomers, styrene or α-methylstyrene. The term "acrylamide polymers" refers to polymers of (meth)acrylamide monomers, and copolymers comprising at least 50% of (meth)acrylamide monomers. Preferably, acrylamide polymers have at least 70% of monomer residues derived from (meth)acrylamide monomers, and most preferably at least 85%.

The polymer of this invention comprises from 2% to 20% of residues of at least one of: (i) an alkyl (meth)acrylate, (ii) a vinyl alkanoate, (iii) an N-vinyl alkylamide, and (iv) an N-alkyl acrylamide; wherein an alkyl group having from 6-25 carbon atoms is present, i.e., the alkyl group of an alkyl (meth)acrylate, 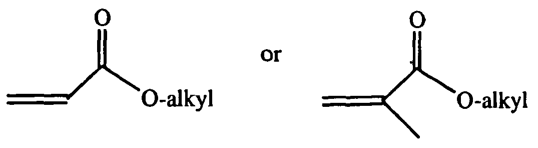 or the alkyl group of a vinyl alkanoate, 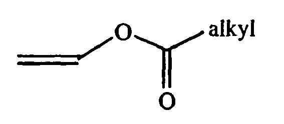 or the alkyl group of an N-vinyl alkylamide, 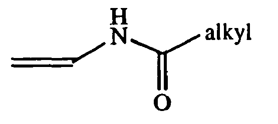 or the alkyl group of an N-alkyl (meth)acrylamide, 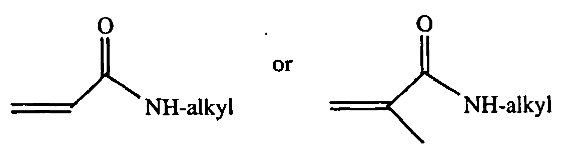 has from 6-25 carbon atoms. If more than one of (i), (ii), (iii) and (iv) are present, the total amount of such residues having a C₆-C₁₈ alkyl group is from 2% to 20%. Preferably, the polymer contains at least 3% of such residues, more preferably at least 5%, and most preferably at least 6%. In one embodiment of the invention, the polymer contains at least 10% of such residues. Preferably, the polymer contains no more than 15% of such residues, and most preferably no more than 12%. Preferably, the polymer contains residues derived from an alkyl (meth)acrylate or a vinyl alkanoate. Preferably, the alkyl group has no more than 22 carbon atoms, more preferably no more than 20. Preferably, the alkyl (meth)acrylate is an alkyl methacrylate.

For purposes of this invention, alkyl groups are straight or branched chain alkyl groups or aralkyl or alkyl carbocyclic groups, such as alkylphenyl groups. It is understood that the alkyl groups may be either of synthetic or of natural origin and, in the latter case particularly, may contain a range of chain lengths. For example, naturally sourced stearic acid, even of commercially pure quality may contain only about 90% of stearic chains, up to about 7% of palmitic chains and a proportion of other chains and lower quality products may contain substantially less stearic acid. It is intended herein that reference to the chain length of such groups is to the predominant chain length which is present as more than 50%, preferably in more than 75%, of the chains.

When a monomer unit is derived from an alkyl (meth)acrylate, the alkyl group may be attached to the (meth)acryloyl group directly, or indirectly for example via one or more, for example up to 60, preferably up to 40, more preferably up to 30 water-soluble linker groups, for example, -CH[R]CH₂O- or -CH[R]CH₂NH- groups wherein R is hydrogen or methyl. Preferably the alkyl group is attached directly, to form an alkyl (meth)acrylate ester, or indirectly through up to 40 oxyethylene residues. Preferably, the alkyl group has from 12 to 18 carbon atoms, more preferably from 16 to 18 carbon atoms. Preferably, the alkyl group is attached directly to the (meth)acryloyl group, i.e., the (meth)acrylate ester is a C₁₂-C₁₈ alkyl (meth)acrylate in which the alkyl group is attached directly. In one preferred embodiment, the (meth)acrylate ester is a C₁₆-C₁₈ alkyl methacrylate.

Preferably, the polymer contains at least 25% of sulfonic acid monomer residues, more preferably at least 40%, and most preferably at least 55%. Preferably, the polymer contains no more than 62% of sulfonic acid monomer residues. Examples of such monomers include, but are not limited to, sulfoethyl methacrylate, p-styrene sulfonate, 2-acrylamido-2-methylpropanesulfonic acid (AMPS); preferably the monomer is AMPS. Preferably, the polymer contains at least 25% acrylamide residues, more preferably at least 28%, and most preferably at least 30%. Preferably, the polymer contains no more than 50% acrylamide residues, more preferably no more than 40%, and most preferably no more than 35%. The polymer of the present invention is crosslinked, that is, at least one crosslinker, such as a monomer having two or more ethylenically unsaturated groups, is included with the copolymer components during polymerization. Preferred examples of such monomers include divinylbenzene (DVB), trimethylolpropane diallyl ether, tetraallyl pentaerythritol, triallyl pentaerythritol, diallyl pentaerythritol, diallyl phthalate, triallyl cyanurate, Bisphenol A diallyl ether, allyl sucroses, methylene bisacrylamide (MBA), trimethylolpropane triacrylate, allyl methacrylate. In one embodiment, the crosslinker does not have ester functionality. The amount of crosslinker residue in the polymer is from 0.25% to 1.5%, based on the total weight of the monomers. Preferably, the amount of crosslinker residue in the polymer is no more than 1.3%, and most preferably no more than 1.2%. Preferably the amount of crosslinker residue in the polymer is at least 0.5%, more preferably at least 0.7%. In one embodiment of the invention, the crosslinker is diethylenically unsaturated, e.g., MBA or DVB.

The rheology modifier may be prepared by copolymerizing the monomers using known precipitation, reverse emulsion, gel polymerization processes, and any other suitable processes known in the art, using, for example, a free-radical initiator such as peroxygen compounds or diazo compounds and, optionally, chain transfer agents. Suitable peroxygen compounds may be peroxides, hydroperoxides, persulfates or organic peroxides and a suitable quantity of initiator may be 0.01% to 3% by weight of the components of the copolymer. A combination of initiators can also be used. The copolymerization temperature may be about 25°C to 95°C, preferably 60°C to 92°C. For a precipitation process, organic solvents are selected so that the monomers are soluble in said solvents but the polymerization products are not soluble in said solvents. During the polymerization process, the reaction medium becomes cloudy and eventually the polymer precipitates. Examples of suitable solvents include, but are not limited to, ethyl acetate, methylene chloride, benzene, methanol, ethanol, butanol, t-butanol, acetone and combinations thereof. Preferably, the solvent is t-butanol. The polymer product can be recovered from the reaction medium by filtration or centrifugation, or distillation to remove the solvents. U.S. Pat. Nos. 5,288,814 and 5,349,030 may be consulted for further general and specific details of such polymerization and recovery techniques, and of suitable monomers and additives.

Surfactants may be used during polymerization to prevent the polymer particles from coagulating during the process, which results in kettle fouling and poor reaction kinetics. Examples of such surfactant include, but are not limited to, polyoxyethylene alkyl ethers, polyoxyethylene sorbitol esters and nonionic block copolymers of propylene oxide and ethylene oxide.

Another beneficial additive is a polymeric surfactant. These may aid in dispersing the solid polymer disclosed in this invention more easily into the aqueous formulation. Examples of such surfactants include, but are not limited to, block copolymers of polyhydroxy fatty acids and poly(ethylene oxide), dimethicone copolyol, dimethicone copolyol phosphate. Such materials are available from, for example, Uniqema of Imperial Chemical Industries, PLC with a tradename of HYPERMER.

The length of the primary polymer chains is typically such that, if the crosslinks were removed, the molecular weight (M_{w}) would be in the range of about 250,000 to 10 million.

The polymer provided in this invention is extremely useful as a thickening, suspending, emulsifying agent for aqueous, aqueous/oil ―based formulations, especially if low pH is required in the formulation. Preferably, the pH of the aqueous and aqueous/oil ―based composition is at least 3, more preferably at least 3.5. In one embodiment of the invention, the pH is at least 4. Preferably, the pH is no more than 8, more preferably no more than 7, and most preferably no more than 6. In one embodiment of the invention, the pH is no more than 5.

Preferably, the polymer is an acrylic polymer. In one embodiment, the polymer is an acrylamide polymer. The polymer may be blended into an aqueous system to be thickened followed by a suitable addition of acidic or basic material if required. The aqueous and aqueous/oil-based compositions of the present invention contain from 0.05% to 5% of at least one polymer of this invention; i.e., the total amount of polymer(s) is in this range. Preferably, the amount of polymer in the aqueous composition is at least 0.1%, more preferably at least 0.2%. Preferably, the amount of copolymer in the aqueous composition is no more than 3%, more preferably no more than 2.5%, and most preferably no more than 2%. In one embodiment of the invention, the aqueous composition contains from 1 to 1.5% of the polymer(s). Preferably, an aqueous composition has at least 15% water, more preferably at least 25%, and most preferably at least 40%. Preferably, an aqueous composition contains less than 20% organic solvent, more preferably less than 10%, and most preferably less than 5%. In one embodiment, the aqueous composition is substantially free of organic solvents.

In one embodiment of this invention, the aqueous compositions of the present invention preferably contain from 1% to 40% of at least one surfactant; i.e., the total amount of surfactant(s) is in this range. More preferably, the aqueous compositions of the present invention contain at least 5% of at least one surfactant, more preferably at least 10%, and most preferably at least 12%. Preferably, the aqueous composition contains no more than 25% of at least one surfactant, more preferably no more than 18%.

The surfactant(s) preferably is selected from the groups of anionic surfactants characterized by carboxylate, sulfonate, sulfate or phosphate solubilizing groups; nonionic surfactants characterized by amide or hydroxyl groups or ethylene oxide chains; and cationic, amphoteric or zwitterionic surfactants. Surfactants must be compatible with the thickening polymer and other ingredients of the aqueous system in the quantity required by the invention. Cationic surfactants characterized by amine or ammonium solubilizing groups, and/or amphoteric surfactants characterized by combinations of the anionic and cationic solubilizing groups may be selected. Preferred surfactants for use in the practice of the invention may be selected from the C₈ to C₁₈ fatty acids or their water soluble salts, water soluble sulfates or ether sulfates of C₈ to C₁₈ alcohols, sulfonated alkylaryl compounds such as, for example, dodecylbenzene sulfonate, alkylphenoxy polyethoxy ethanols, for example with C₇ to C₁₈ alkyl groups and 9 to 40 or more oxyethylene units, ethylene oxide derivatives of long chain carboxylic acids, for example of lauric, myristic, palmitic or oleic acids, ethylene oxide derivatives of long chain alcohols, for example of lauryl or cetyl alcohols, alkanolamides and polyglucosides, for example the alkyl polyglucosides, and surfactants derived from amino acids, e.g. glutamates. Suitable cationic surfactants may be, for example, lauryl pyridinium chloride, octylbenzyltrimethyl-ammonium chloride, dodecyl trimethylammonium chloride and ethylene oxide condensates of primary fatty acid amines. Suitable zwitterionic surfactants include, e.g., betaines.

The composition of the present invention optionally may include other ingredients, e.g., salts, co-rheology modifiers (e.g. Laponite™ clay, cellulosics, carrageenan, xanthan, PEG-150 distearate (Aculyn™ 60 rheology modifier), PEG-150 pentaerythrityl tetrastearate, other associative or non-associative rheology modifiers, polymeric quats (e.g., PQ-7 and PQ-10), organic or inorganic particles (including, for example, abrasives, beads, mica, encapsulated oil beads), silicones, pearlizing agents, dispersed liquids, dispersants, soluble or dispersed biocides, vitamins, humectants, enzymes, bleach, emollient, fragrance, dyes, thioglycolic acid, UVA and UVB absorbers, infrared absorbers, etc. Insoluble materials which may be suspended in the aqueous composition include clay, beads, wax, gelatin and other particulate materials.

In another embodiment of this invention, the aqueous-based compositions contain organic solvents, preferably glycols and C₁-C₅ alcohols. Examples of such solvents include, but are not limited to, ethanol, propanol, isopropanol, butanol, propylene glycol. Preferred solvents are ethanol, isopropanol and propylene glycol. Typically, the amount of solvent is at least 20%, more preferably, it is at least 50%. This type of formulation can be used as a hand sanitizer, disinfection agent or cooling agent.

In yet another embodiment of this invention, the aqueous-based compositions contain organic acids. Examples of such organic acids include, but not limited to, citric acid, ascorbic acid, salicylic acid, lactic acid, glycolic acid, caffeic acid, and kojic acid. Preferably, the amount of organic acid is at least 0.5%, more preferably at least 1%. Preferably, the amount of organic acid is no more than 10%, more preferably no more than 8%. This type of formulation can be used as a hard surface cleaner or a skin bleaching and whitening agent.

A particular aqueous composition in which the polymer of this invention is useful is a body wash. Typical components of a body wash, in addition to the polymer thickener and surfactant mentioned previously, include sufficient base or acid to attain a pH of 4-6.75, preferably 4.5-6.75, and more preferably 6.0-6.6; and optional ingredients, including silicones, polyquats, pearlizing agents, vitamins, oils, fragrances, dyes, biocides, and insoluble beads made from a variety of materials, including polyolefins, e.g., polyethylene and polystyrene; gelatin; mica; encapsulated oil or vitamin beads; and Jojoba wax beads. Preferably, the amount of beads is from 0.1% to 2%, more preferably from 0.2% to 1%. Preferably, the average radius of the beads is from 0.1 mm to 10 mm. Typically, the surfactant used is a mixture of an anionic surfactant and an amphoteric surfactant, preferably from 8% to 16% of an anionic surfactant and from 1% to 5% of an amphoteric surfactant.

A second particular aqueous composition in which the polymer of this invention is useful is a shampoo. Typical components of a conditioning shampoo, in addition to the polymer thickener and surfactant mentioned previously, include sufficient base to attain a pH of 4-7, preferably 4.75-7.0. One particular embodiment of the invention is a conditioning shampoo containing a dispersed silicone, and optional ingredients, including pearlizing agents and zinc pyrithione or other anti-dandruff agents.

A third aqueous composition in which the polymer of this invention is useful is a hard surface cleaner. Typical components of a hard surface cleaner in addition to the polymer thickener and surfactant mentioned previously, include sufficient base to achieve a pH of 9-12, and optional ingredients including solvents, salts, fragrances, and dyes. For hard surface cleaners at pH<4, suitable acid is added with the polymer thickener and optional ingredients.

The polymer also is suitable for thickening and stabilizing flowable pesticide dispersions and emulsions. Other formulations in which the polymer is useful include hair gel (alcohol-containing and alcohol-free); hair styling cream, paste, or gum; shampoo, conditioner, 2 in 1 conditioning shampoo, body wash/shower gel, liquid soap, sunscreen lotions and sprays, tanning lotions, skin care lotions, skin care lotions containing vitamins, two-part hair dyes, permanent waving formulations, textile and hard surface cleaners, e.g., laundry detergent, liquid auto-dish detergent, manual dish detergent, spot-pretreaters, oven cleaners, and glass/window cleaners, and thickening all types of alcohol or water/alcohol formulations. The polymer may also be used as a polymeric emulsifier with or without co-emulsifiers or surfactants.

### EXAMPLES

### Representative Example of Polymerization by a Precipitation Process in tert-Butanol:

535.35g of tert-butanol and a calculated amount of AMPS were added to a 2 liter reactor equipped with a reflex condenser, thermometer and gas inlet. The mixture was neutralized with equimolar ammonium hydroxide and stirred at 250 rpm under nitrogen for 30 minutes. After 30 minutes, acrylamide, methylene bisacryamide and stearyl methacrylate were added and each was rinsed with 3g of tert-butanol. This mixture was heated under nitrogen to 60°C and initiated with 1.18% lauryl peroxide based on the total monomer. After the observed exotherm, the temperature was maintained at 65-70°C for 30 minutes. The nitrogen sweep was stopped 15 minutes after the peak exotherm temperature and the polymer precipitated within 20 minutes. This reaction was chased with 0.5% sodium bisulfite dissolved in a minimal amount of DI water at reaction temperature for 60 minutes. After 60 minutes the reactor was heated to reflux temperature and maintained at this temperature for 2 hours. The polymer was separated from the solvent by vacuum filtration and dried under vacuum for 24 hours at 80°C.

### Representative Example of Preparation of a 0.5% polymer in aqueous solution:

Into a 300 mL beaker, 199g of DI water were added and, slowly, 1g of the dried polymer was added to the water. The solution was allowed to swell, then mixed at high shear until all the solids were dissolved. The viscosity (reported as cps) was measured by Brookfield viscometer using the appropriate RV spindle at 6, 12, 30 and 60 rpm. No pH adjustment was needed.

### Representative Example of Preparation of a 1% polymer in 10% SLES (Steol CS-230):

38.46 g of SLES were added into a 200 mL beaker, then add enough water to have a total weight of 95g. The pH was adjusted to 4 with a 10% citric acid solution and water added to a total weight of 99 g. 1g of polymer was added slowly with adequate mixing.

### List of Polymers

| Entry | Polymer composition |
|---|---|
| **A** | 95.75 AMPS/4.7 NVP¹//1 MBA |
| **B** | 95.75 AMPS/4.7 NVP//0.75 MBA |
| **C** | 68 AMPS/32 AM//1 MBA |
| **D** | 58 AMPS/32 AM/10 Lipo1²//1 MBA |
| **E** | 58 AMPS/32 AM/10 SMA³//1 MBA |
| **F** | 58 AMPS/32 AM/10 SMA |
| **G** | 58 AMPS/32 AM/10 SMA//0.5 MBA |
| **H** | 58 AMPS/32 AM/10 SMA//0.75 MBA |
| **I** | 58 AMPS/32 AM/10 SMA//1.25 MBA |
| **J** | 58 AMPS/32 AM/10 SMA//2 DVB |
| **K** | 58 AMPS/32 AM/10 LMA⁴//1 MBA |
| **L** | 58 AMPS/32 AM/10 CEMA⁵//1 MBA |
| **M** | 58 AMPS/32 AM/10 Lipo1//1 MBA |
| **N** | 60.5 AMPS/34.5 AM/5 SMA//1 MBA |
| **O** | 55.5 AMPS/29.5 AM/15 SMA//1 MBA |
| **P** | 53 AMPS/27 AM/20 SMA//1 MBA |
| **Q** | 37.5 AMPS/47.5 AM/15 SMA//1 MBA |
| **R** | 47.5 AMPS/37.5 AM/15 SMA//1 MBA |
| **S** | 55.5 AMPS/29.5 AM/15 SMA//1 MBA |
| **T** | 67.5 AMPS/17.5 AM/15 SMA//1 MBA |
| **U** | 70 AMPS/20 EA/10 SMA//1 MBA with 4% Triton X-405 |
| **V** | 60 AMPS/30 EA/5 SMA/5 Lipo1//1 MBA |
| **W** | 70 AMPS/20 BA/5 SMA/5 Lipo1//1 MBA |
| **X** | 58 AMPS/32 AA/10 SMA//1 MBA |
| **Y** | 58 AMPS/32 MAM/10 SMA//1 MBA |

| | |
|---|---|
| 1. NVP is N-Vinylpyrrolidone 2. Lipo1 is a lipophilically modified monomer having a linear saturated C₁₆₋₁₈ alkyl group connected through about 18-26 oxyethylene residues to a methacryloyl group. 3. SMA is stearyl methacrylate. 4. LMA is lauryl methacrylate. 5. CEMA is cetyl methacrylate. | |

The following tables present viscosity data obtained for the indicated polymers at the indicated levels in the aqueous system (% solids) and pH, at various rpm rates (6, 12, 30 and 60) and turbidity in NTU (Nephelometric Turbidity Units).

**Table 1: Variations in Monomer Content, 0.5% Solids in water.**

| polymer | pH | spindle | 6 rpm | 12 rpm | 30 rpm | 60 rpm | turbidity |
|---|---|---|---|---|---|---|---|
| A | 5.3 | RV7 | 34,670 | 24,330 | 13,870 | 8930 | 18 |
| D | 3.2 | RV7 | 42,000 | 39,670 | 23,730 | 14,070 | 2 |
| E | 3.1 | RV7 | 123,300 | 75,000 | 42,530 | 28,730 | 14 |

**Table 2: Variations in Monomer Content, 1% Solids in water.**

| polymer | pH | spindle | 6 rpm | 12 rpm | 30 rpm | 60 rpm | turbidity |
|---|---|---|---|---|---|---|---|
| A | 5.4 | RV7 | 62,000 | 43,670 | 27,870 | 18,070 | 31 |
| B | 2.9 | LV3 | 1,450 | 975 | 610 | 440 | 12 |
| C | 3.3 | RV7 | 73,330 | 49,670 | 26,130 | 15,600 | 24 |
| D | 3.1 | RV7 | 134,670 | 83,670 | 39,070 | 21,600 | 3 |
| E | 3 | RV7 | 388,000 | 200,300 | 99,333 | 55,130 | |

**Table 3: Variations in Monomer Content, 1% Solids in 10% SLES* aqueous solution.**

| polymer | pH | Spindle | 6 rpm | 12 rpm | 30 rpm | 60 rpm | turbidity |
|---|---|---|---|---|---|---|---|
| A | 4.0 | LV3 | 700 | 500 | 310 | 215 | 48 |
| " | 3.0 | LV3 | 600 | 400 | 240 | 165 | 37 |
| D | 4.0 | LV3 | 1,700 | 1,000 | 520 | 330 | 33 |
| " | 3.0 | LV3 | 1,200 | 600 | 350 | 230 | 20 |
| E | 3.9 | LV4 | 5,750 | 3,525 | 1,930 | 1,230 | 26 |
| " | 2.9 | LV4 | 4,250 | 2,700 | 1,450 | 935 | 18 |

| | | | | | | | |
|---|---|---|---|---|---|---|---|
| * SLES (SODIUM LAURETH SULFATE) used in this study is Steol CS-230 supplied by Stepan Company, Illinois. | | | | | | | |

**Table 4: Variations in Monomer Content, 2% Solids in 10% SLES aqueous solution.**

| polymer | pH | Spindle | 6 rpm | 12 rpm | 30 rpm | 60 rpm | turbidity |
|---|---|---|---|---|---|---|---|
| A | 7.7 | LV4 | 14,200 | 8,900 | 5,100 | 3,310 | 109 |
| B | 5.8 | LV3 | 2,000 | 1,375 | 840 | 610 | 12 |
| C | 7.9 | LV3 | 3,900 | 2,400 | 1,350 | 875 | 142 |
| D | 6.9 | RV7 | 44,670 | 33,667 | 18,533 | 13,267 | 73 |
| E | 7.4 | RV7 | 210,670 | 153700 | 66,533 | 33,133 | 52 |

**Table 5: Effect of Crosslinker Level, 0.5% Solids in water.**

| polymer | pH | Spindle | 6 rpm | 12 rpm | 30 rpm | 60 rpm | turbidity |
|---|---|---|---|---|---|---|---|
| **F** | 5.4 | RV3 | 417 | 367 | 293 | 238 | 27 |
| **G** | 5.5 | RV6 | 17,830 | 10,750 | 5,200 | 3,200 | 24 |
| **H** | 5.3 | RV6 | 39,170 | 22,420 | 10,930 | 6,380 | 16 |
| **E** | 3.3 | RV6 | 67,500 | 39,580 | 19,100 | 10,820 | 7 |
| **I** | 4.7 | RV6 | 80,500 | 45,420 | 23,200 | 13,320 | 26 |
| **J** | 5.0 | RV4 | 13,500 | 8,600 | 4,920 | 3,190 | 273 |

**Table 6: Effect of Crosslinker Level, 1% Solids in 10% SLES aqueous solution.**

| polymer | pH | Spindle | 6 rpm | 12 rpm | 30 rpm | 60 rpm | turbidity |
|---|---|---|---|---|---|---|---|
| **F** | 4.1 | LV2 | 80 | 70 | 52 | 40 | 2 |
| **G** | 4.2 | LV4 | 6,600 | 4,400 | 2,520 | 1,600 | 16 |
| **H** | 4.1 | LV4 | 5,600 | 3,700 | 2,140 | 1,390 | 31 |
| **E** | 3.9 | LV4 | 5,750 | 3,525 | 1,930 | 1,230 | 29 |
| **I** | 4.1 | LV4 | 4,000 | 2,750 | 1,740 | 1,210 | 36 |
| **J** | 4.0 | LV3 | 2,000 | 1,400 | 940 | 670 | 89 |

**Table 7: Effect of (Meth)acrylate Ester Alkyl Group, 0.5% Solids in water.**

| polymer | pH | Spindle | 6 rpm | 12 rpm | 30 rpm | 60 rpm | turbidity |
|---|---|---|---|---|---|---|---|
| **K** | 4.1 | RV6 | 62,670 | 35,330 | 16,800 | 9,770 | 6 |
| **L** | 4.1 | RV6 | 85,000 | 46,920 | 21,900 | 2,220 | 9 |
| **E** | 3.3 | RV6 | 67,500 | 39,580 | 19,100 | 10,820 | 7 |
| **M** | 3.2 | RV7 | 42,000 | 39,670 | 23,730 | 14,070 | 3 |

**Table 8: Effect of (Meth)acrylate Ester Alkyl Group, 1% Solids in 10% SLES aqueous solution.**

| polymer | pH | Spindle | 6 rpm | 12 rpm | 30 rpm | 60 rpm | turbidity |
|---|---|---|---|---|---|---|---|
| **K** | 4.1 | RV4 | 2,670 | 1,670 | 950 | 620 | 52 |
| **L** | 4.1 | RV4 | 3,500 | 2,220 | 1,190 | 770 | 34 |
| **E** | 3.9 | LV4 | 5,750 | 3,525 | 1,930 | 1,230 | 29 |
| **M** | 4 | LV3 | 1,700 | 1,000 | 520 | 330 | 73 |

**Table 9: Effect of (Meth)acrylate Alkyl Ester Amount, 0.5% Solids in water.**

| polymer | pH | Spindle | 6 rpm | 12 rpm | 30 rpm | 60 rpm | turbidity |
|---|---|---|---|---|---|---|---|
| **N** | 4.3 | RV6 | 60,170 | 34,830 | 16,670 | 9,480 | 17 |
| **E** | 3.3 | RV6 | 67,500 | 39,580 | 19,100 | 10,820 | 7 |
| **O** | 3.6 | RV6 | 82,500 | 47,500 | 22,470 | 12,720 | 19 |
| **P** | 3.0 | RV6 | 80,830 | 47,250 | 22,430 | 12,820 | 83 |

**Table 10: Effect of (Meth)acrylate Alkyl Ester Amount, 1% Solids in 10% SLES aqueous solution.**

| polymer | pH | Spindle | 6 rpm | 12 rpm | 30 rpm | 60 rpm | turbidity |
|---|---|---|---|---|---|---|---|
| **N** | 3.5 | LV3 | 2,360 | 1,530 | 900 | 600 | 55 |
| **E** | 3.9 | LV4 | 5,750 | 3,520 | 1,930 | 1,230 | 29 |
| **O** | 3.6 | LV4 | 4,160 | 2,650 | 1,480 | 960 | 15 |
| **P** | 4.2 | LV3 | 2,050 | 1,300 | 740 | 485 | 5 |

**Table 11: Effect of AMPS/AM Ratio, 0.5% Solids in water.**

| polymer | pH | Spindle | 6 rpm | 12 rpm | 30 rpm | 60 rpm | turbidity |
|---|---|---|---|---|---|---|---|
| **Q** | 3.8 | RV7 | 238,000 | 130,300 | 60,300 | 34,100 | 158 |
| **R** | 4 | RV6 | 78,000 | 41,580 | 18,900 | 10,780 | 115 |
| **S** | 3.6 | RV6 | 82,500 | 47,500 | 22,470 | 12,720 | 19 |
| **T** | 4.0 | RV6 | 75,330 | 42,330 | 19,870 | 11,350 | 72 |

**Table 12: Effect of AMPS/AM Ratio, 1% Solids in 10% SLES aqueous solution.**

| polymer | pH | Spindle | 6 rpm | 12 rpm | 30 rpm | 60 rpm | turbidity |
|---|---|---|---|---|---|---|---|
| 30 rpm | 4.2 | LV4 | 5,900 | 3,550 | 1,880 | 1,190 | 5 |
| 30 rpm | 4.2 | LV4 | 4,550 | 2,780 | 150 | 970 | 6 |
| 30 rpm | 3.6 | LV4 | 4,160 | 2,650 | 1,480 | 960 | 15 |
| 30 rpm | 4 | LV3 | 2,350 | 1,425 | 790 | 520 | 11 |

**Table 13: Replacement of AM by Other Monomers, 0.5% Solids in water.**

| polymer | pH | Spindle | 6 rpm | 12 rpm | 30 rpm | 60 rpm | turbidity |
|---|---|---|---|---|---|---|---|
| **E** | 3.3 | RV6 | 67,500 | 39,580 | 19,100 | 10,820 | 7 |
| **U** | 2.7 | RV3 | 8,000 | 4,800 | 3,400 | 2,650 | Hazy |
| **V** | 2.6 | RV4 | 10,000 | 6,200 | 4,400 | 3,550 | Hazy |
| **W** | 2.6 | RV6 | 19,500 | 11,330 | 5,770 | 3,500 | Hazy |
| **X** | 3.3 | RV4 | 10,000 | 6,000 | 4,200 | 3,060 | 11 |
| **Y** | 5.6 | RV4 | 13,500 | 8,250 | 4,030 | 2,430 | 74 |

**Table 14: Replacement of AM by Other Monomers, 1% Solids in 10% SLES aqueous solution.**

| polymer | pH | Spindle | 6 rpm | 12 rpm | 30 rpm | 60 rpm | turbidity |
|---|---|---|---|---|---|---|---|
| **E** | 3.9 | LV4 | 5,750 | 3,520 | 1,930 | 1,230 | 29 |
| **U** | 4.0 | LV2 | 470 | 315 | 196 | 120 | hazy |
| **V** | 4.0 | LV2 | 340 | 220 | 136 | 95 | hazy |
| **W** | 4.0 | LV2 | 680 | 440 | 248 | 168 | hazy |
| **X** | 4.0 | LV3 | 1,000 | 665 | 388 | 266 | 36 |
| **Y** | 4.0 | LV3 | 1,200 | 725 | 440 | 300 | hazy |

| | | | | | | | |
|---|---|---|---|---|---|---|---|
| * 4% TRITON X-405 added | | | | | | | |

**Table 15: Viscosity Profile in Aqueous-alcoholic mixture at different Ethanol Level**

| Ethanol% | Polymer E | | | Carbopol 940 | | |
|---|---|---|---|---|---|---|
| | Spindle | 6 rpm | 60 rpm | Spindle | 6 rpm | 60 rpm |
| 10 | RV6 | 60333 | 9133 | RV6 | 80167 | 12817 |
| 20 | RV6 | 49167 | 7867 | RV6 | 79833 | 12233 |
| 50 | RV6 | 27500 | 5350 | | Precipitate | |
| 75 | RV6 | 10667 | 2250 | | N/A | |

| | | | | | | |
|---|---|---|---|---|---|---|
| CARBOPOL 940 is supplied by Noveon, Inc., Ohio and was neutralized with either sodium hydroxide or ammonia for this study. | | | | | | |

**Table 16. Thickening of organic acid with 0.5% polymer in water at low pH.**

| Formulation (polymer with organic·acid in water) | pH | spindle | 6 rpm | 12 rpm | 30 rpm | 60 rpm | turbidity |
|---|---|---|---|---|---|---|---|
| 0.5% E with 3% citric acid | 2.3 | RV6 | 1370 | 867 | 507 | 350 | 49 |
| 0.5% E with 6% citric acid | 2.3 | RV6 | 267 | 183 | 133 | 97 | 41 |
| 0.5% E with 3% ascorbic acid | 2.6 | RV6 | 15330 | 8830 | 4330 | 2570 | 27 |
| 0.5% E with 6% ascorbic acid | 2.5 | RV6 | 9500 | 5670 | 2900 | 1750 | 30 |
| 0.5% E with 3% salicylic acid | 2.6 | RV6 | 9500 | 5500 | 2800 | 1718 | ND* |
| 0.5% E with 6% salicylic acid | 2.6 | RV6 | 7667 | 4667 | 2500 | 1550 | ND* |

| | | | | | | | |
|---|---|---|---|---|---|---|---|
| * Stable emulsion was formed. | | | | | | | |

**Table 17. Viscosity and clarity comparison with Xanthan gum in 3% of organic acid solutions in water at different level of polymer loading.**

| % polymer | | 0.5 | 1 | 1.5 |
|---|---|---|---|---|
| Polymer E with Citric Acid | Spindle | RV3 | RV6 | RV7 |
| | viscosity at 30 rpm | 507 | 7400 | 50530 |
| | Turbidity | 41 | 57 | 199 |
| Xanthan gum with Citric Acid | Spindle | RV4 | RV5 | RV6 |
| | viscosity at 30 rpm | 520 | 2387 | 5400 |
| | Turbidity | 245 | 957 | off scale |
| Polymer E with Ascorbic Acid | Spindle | RV5 | RV7 | RV7 |
| | viscosity at 30 rpm | 4333 | 35200 | 48533 |
| | Turbidity | 30 | 59 | 94 |
| Xanthan gum with Ascorbic Acid | Spindle | RV5 | RV5 | RV6 |
| | viscosity at 30 rpm | 667 | 2333 | 4667 |
| | Turbidity | 342 | 882 | off scale |

| | | | | |
|---|---|---|---|---|
| Xanthan gum is supplied by City Chemical Inc., 139 Allings Crossing Rd, West Haven, CT 06516. | | | | |

## Claims

1. A polymer comprising:
(a) from 15% to 65% sulfonic acid monomer residues;
(b) from 15% to 70% acrylamide residues;
(c) from 2% to 20% of residues of at least one hydrophobic monomer selected from: (i) an alkyl (meth)acrylate, (ii) a vinyl alkanoate, (iii) an N-vinyl alkylamide, and (iv) an N-alkyl (meth)acrylamide; wherein an alkyl group having from 6-25 carbon atoms is present; and
(d) from 0.25% to 1.5% of residues of at least one crosslinker.

2. The polymer of claim 1 in which said at least one hydrophobic monomer is a (meth)acrylate ester containing an alkyl group having from 10-20 carbon atoms.

3. The polymer of claim 2 in which the sulfonic acid monomer residue is derived from 2-acrylamido-2-methylpropanesulfonic acid.

4. The polymer of claim 3 in which the (meth)acrylate ester contains from 0-30 ethylene oxide units and an alkyl group having from 12-18 carbon atoms.

5. The polymer of claim 4 in which the (meth)acrylate ester is a C₁₂-C₁₈ alkyl (meth)acrylate in which the alkyl is attached directly to a (meth)acryloyl group.

6. The polymer of claim 5 having from 0.5% to 1.3% of residues of at least one diethylenically unsaturated crosslinker.

7. An aqueous composition having a pH from 2 to 10, and comprising from 0.1% to 5% of the polymer of claim 6.

8. The aqueous composition of claim 7 having from 1% to 40% of at least one surfactant.

9. The aqueous composition of claim 8 having a pH from 3 to 8.

10. The aqueous composition of claim 9 comprising from 0.3% to 2.5% of the polymer.

## Patentansprüche

1. Poymer, umfassend
(a) von 15% bis 65% Sulfonsäuremonomerreste,
(b) von 15% bis 70% Acrylamidreste,
(c) von 2% bis 20% Reste von mindestens einem hydrophoben Monomer, ausgewählt aus (i) einem Alkyl(meth)acrylat, (ii) einem Vinylalkanoat, (iii) einem N-Vinylalkylamid und (iv) einem N-Alkyl(meth)acrylamid, wobei ein Alkylrest mit 6-25 Kohlenstoffatomen vorhanden ist, und
(d) von 0,25% bis 1,5% Reste von mindestens einem Vernetzer.

2. Polymer nach Anspruch 1, wobei mindestens ein hydrophobes Monomer ein (Meth)acrylatester, enthaltend einen Alkylrest mit 10-20 Kohlenstoffatomen, ist.

3. Polymer nach Anspruch 2, wobei der Sulfonsäuremonomerrest von 2-Acrylamido-2-methylpropansulfonsäure abgeleitet ist.

4. Polymer nach Anspruch 3, wobei der (Meth)acrylatester 0-30 Ethylenoxideinheiten und einen Alkylrest mit 12-18 Kohlenstoffatomen enthält.

5. Polymer nach Anspruch 4, wobei der (Meth)acrylatester ein C₁₂-C₁₈-Alkyl(meth)acrylat ist, worin Alkyl direkt an einen (Meth)acryloylrest gebunden ist.

6. Polymer nach Anspruch 5, welches von 0,5% bis 1,3% Reste von mindestens einem diethylenisch ungesättigten Vernetzer aufweist.

7. Wässrige Zusammensetzung mit einem pH-Wert von 2 bis 10, welche von 0,1% bis 5% des Polymers von Anspruch 6 umfasst.

8. Wässrige Zusammensetzung nach Anspruch 7, welche von 1% bis 40% von mindestens einem grenzflächenaktiven Mittel aufweist.

9. Wässrige Zusammensetzung nach Anspruch 8 mit einem pH-Wert von 3 bis 8.

10. Wässrige Zusammensetzung nach Anspruch 9, welche von 0,3% bis 2,5% des Polymers umfasst.

## Revendications

1. Polymère comprenant :
(a) de 15 % à 65 % de groupements de monomère d'acide sulfonique ;
(b) de 15 % à 70 % de groupements d'acrylamide;
(c) de 2 % à 20 % de groupements d'au moins un monomère hydrophobe choisi parmi : (i) un (méth)acrylate d'alkyle, (ii) un alcanoate de vinyle, (iii) un N-vinylalkylamide et (iv) un N-alkyl(méth)acrylamide ; où un groupe alkyle ayant de 6-25 atomes de carbone est présent ; et
(d) de 0,25 % à 1,5 % de groupements d'au moins un réticulant.

2. Polymère selon la revendication 1, où ledit au moins un monomère hydrophobe est un ester (méth)acrylate contenant un groupe alkyle ayant de 10-20 atomes de carbone.

3. Polymère selon la revendication 2, où le groupement de monomère d'acide sulfonique est dérivé de l'acide 2-acrylamido-2-méthylpropanesulfonique.

4. Polymère selon la revendication 3, où l'ester (méth)acrylate contient de 0-30 unités d'oxyde d'éthylène et un groupe alkyle ayant de 12-18 atomes de carbone.

5. Polymère selon la revendication 4, où l'ester (méth)acrylate est un (méth)acrylate de C₁₂-C₁₈ alkyle où l'alkyle est fixé directement à un groupe (méth)acryloyle.

6. Polymère selon la revendication 5 ayant de 0,5 % à 1,3 % de groupements d'au moins un réticulant diéthyléniquement insaturé.

7. Composition aqueuse ayant un pH de 2 à 10 et comprenant de 0,1 % à 5 % du polymère selon la revendication 6.

8. Composition aqueuse selon la revendication 7 ayant de 1 % à 40 % d'au moins un tensioactif.

9. Composition aqueuse selon la revendication 8 ayant un pH de 3 à 8.

10. Composition aqueuse selon la revendication 9 comprenant de 0,3 % à 2,5 % du polymère.
